# EUROPEAN PATENT SPECIFICATION

(11) **EP 1 930 206 B1**
(45) Date of publication and mention of the grant of the patent: **12.05.2010**
(21) Application number: 07101340.3
(22) Date of filing: 29.01.2007
(51) Int. Cl.: B60N 2/30, B60N 2/015

(54) **Structure for movement of rear catch of double folding seat for vehicle**
Aufbau zur Bewegung der hinteren Arretierung eines zweifach klappbaren Fahrzeugsitzes
Structure pour le mouvement du loquet arrière d'un double siège rabattable pour véhicule

(30) Priority: 06.12.2006 KR 20060123070
(43) Date of publication of application: 11.06.2008
(73) Proprietor: HYUNDAI MOTOR COMPANY, Seoul (KR)
(72) Inventor: Ma, Chae Hoon, Gyeonggi-do (KR); Jeong, Chan Ho, Gunpo-si, Gyeonggi-do (KR)
(74) Representative: Viering, Jentschura & Partner

(56) References cited:
- WO-A-99/41102
- DE-A1- 10 036 553

## Description

### CROSS-REFERENCE TO RELATED APPLICATION

This application claims priority to and the benefit of Korean Patent Application No. 10-2006-0123070 filed in the Korean Intellectual Property Office on December 6, 2006, the entire contents of which are incorporated herein by reference.

### BACKGROUND OF THE INVENTION

### (a) Field of the Invention

The present invention relates to a structure for movement of a rear catch of a double folding seat for a vehicle, and more particularly to a structure for movement of a rear catch of a double folding seat for a vehicle which can increase a space between a quarter trim which is a vehicle body frame and a rear catch.

### (b) Description of the Related Art

A seat of a vehicle may adopt a double folding mechanism in order to enhance convenience of a passenger and for various purposes.

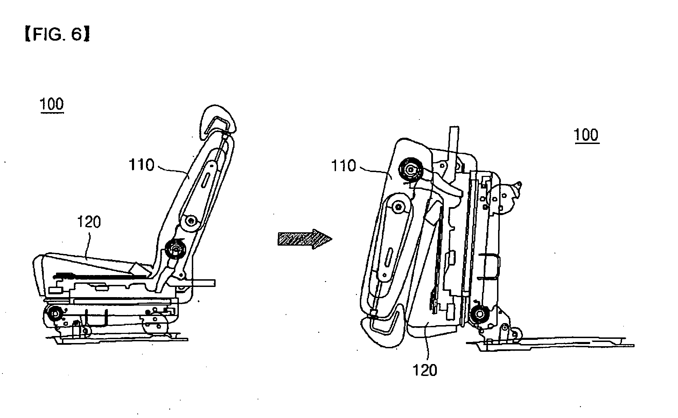

FIG. 6 is a drawing showing operations of a conventional double folding seat 100 of a vehicle. In the double folding seat 100, a seat back 110 may be forwardly folded with respect to a lower portion of a seat cushion 120, and the seat cushion 120 may be then forwardly folded.

In particular, in order to forwardly fold the seat cushion 120, a front mounting structure which is fixed by a hinge coupling part is provided to a front part of a seat frame, and a rear mounting structure using a rear catch and a striker so as to be released from locking by manipulation of a lever is provided to a rear part of the seat frame.

In the double folding seat 100 which is formed in this way, in case that a lever is pulled after the seat back 110 is forwardly folded, the rear catch is separated from the striker so that the seat cushion 120 can be erected.

However, in the conventional double folding seat, since a gap between a quarter trim to which a sliding door of a vehicle is mounted and a latch structure of a double folding seat is insufficient, it is difficult for a passenger to get in or get out of a third-array seat.

A structure for movement of a rear coach of a double folding seat according to the preamble of claim 1 is known from WO-A-99/41102.

### SUMMARY OF THE INVENTION

The present invention has been made in an effort to provide a structure for movement of a rear catch of a double folding seat for a vehicle having advantages of increasing a space between a rear catch and a quarter trim.

An exemplary embodiment of the present invention provides a structure for movement of a rear catch of a double folding seat for a vehicle having a seat frame with a front mounting structure which is fixed by a hinge coupling part including a front catch and a rear mounting structure using a rear catch and a striker so as to be unlocked in response to a manipulation of a lever, including: a moving operation part connecting leg frames with a pair of connecting pipes, the rear catch being movable in left and right directions on the connecting pipe, limiting a moving gap of the rear catch and at the same time returning the rear catch to an original state thereof; and a cable one end of which is connected to the rear catch and the other end of which is disposed in a front side and is fixed to a side surface of a leg frame which rotates during folding.

The moving operation part may include: a movement limit bracket which is mounted to the leg frame so as to limit movement of the rear catch and has a shape of an up side down L; a return spring which is mounted to the connecting pipe between the rear catch and the movement limit bracket so as to return the rear catch to an original state thereof when a seat returns to an original state; and a bushing which is connected to the connecting pipe so as to make the rear catch smoothly move on the connecting pipe.

The cable may pass through a vertical surface of the movement limit bracket and may be fixed to a side surface of the rear catch such that a moving direction of the cable is equal to a moving direction of the rear catch so that the rear catch can easily move on the connecting pipe.

A direction change bracket which may be fixed to the front catch of the hinge coupling part is interposed in the cable such that the direction of the cable can be changed on an extended line thereof.

The return springs may be provided both to the two connecting pipes so as to make equilibrium in left and right direction while the rear catch moves in left and right directions.

A projection may be arranged on an inner surface of the bushing so as to reduce contact surface with the connecting pipe thereby minimizing friction force.

### BRIEF DESCRIPTION OF THE DRAWINGS

FIG. 1 and FIG. 2 are perspective views respectively showing states before and after an operation of a structure for movement of a rear catch of a double folding seat for a vehicle according to an exemplary embodiment of the present invention.
FIG. 3 is a perspective view of a moving operation part of a structure for movement of a rear catch of a double folding seat for a vehicle according to an exemplary embodiment of the present invention.
FIG. 4 is a side view of a moving operation part of a structure for movement of a rear catch of a double folding seat for a vehicle according to an exemplary embodiment of the present invention.
FIG. 5 is a drawing showing a gap between a quarter trim and a latch structure of an exemplary embodiment of the present invention and a prior art.
FIG. 6 is a drawing showing operations of a conventional double folding seat of a vehicle.

### <Description of Reference Numerals Indicating Primary Elements in the Drawings>

| | | | |
|---|---|---|---|
| 5: | quarter trim | 10: | seat frame |
| 15: | connection pipe | 20: | rear catch |
| 25: | striker | 30: | front catch |
| 35: | direction change bracket | 40: | leg frame |
| 50: | moving operation part | 51: | movement limit bracket |
| 52: | return spring | 53: | bushing |
| 60: | cable | | |

### DETAILED DESCRIPTION OF THE EMBODIMENTS

An exemplary embodiment of the present invention will hereinafter be described in detail with reference to the accompanying drawings.

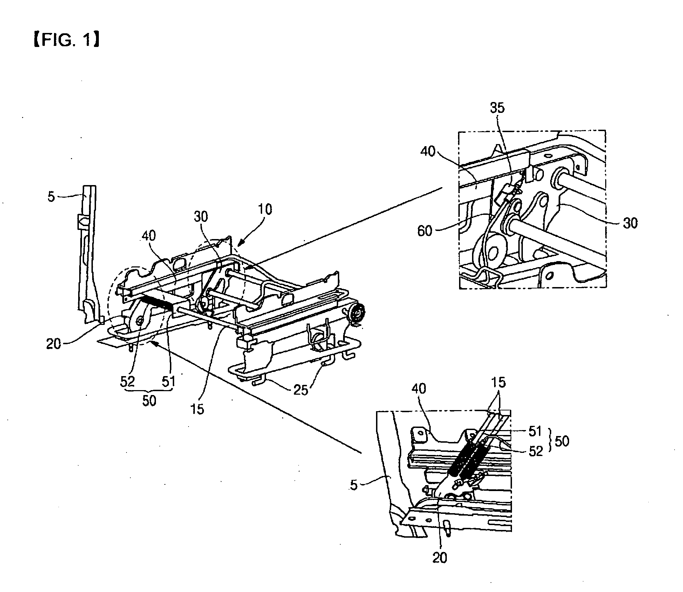

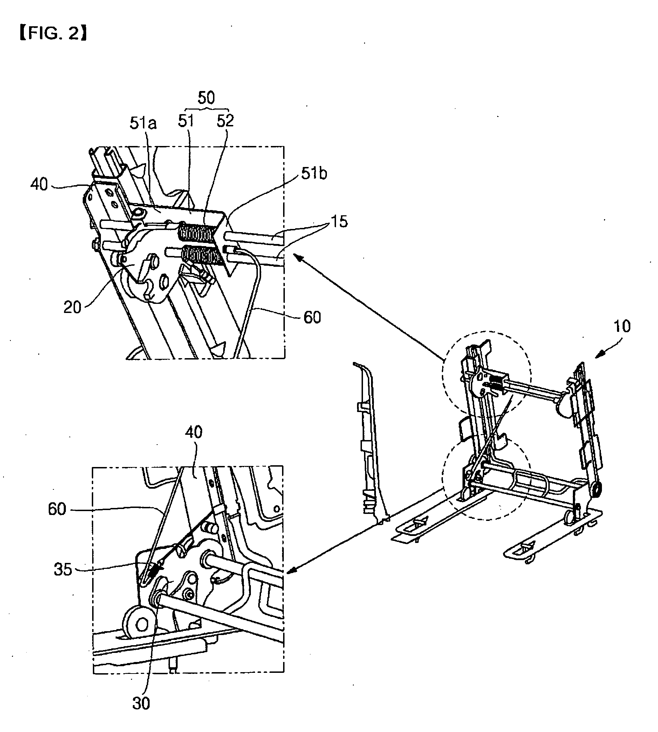

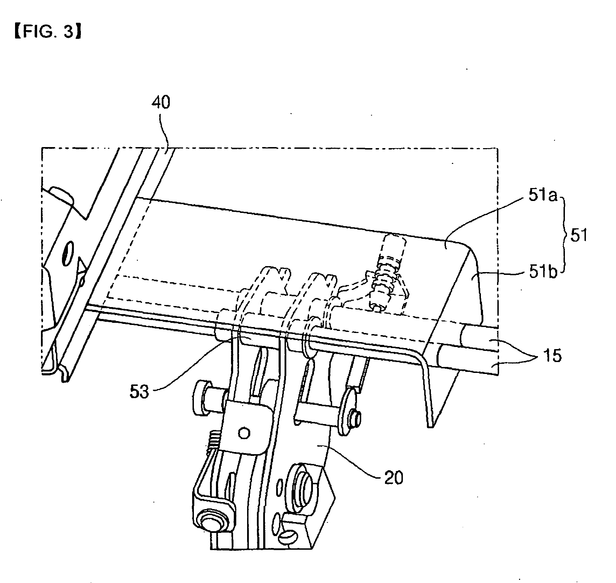

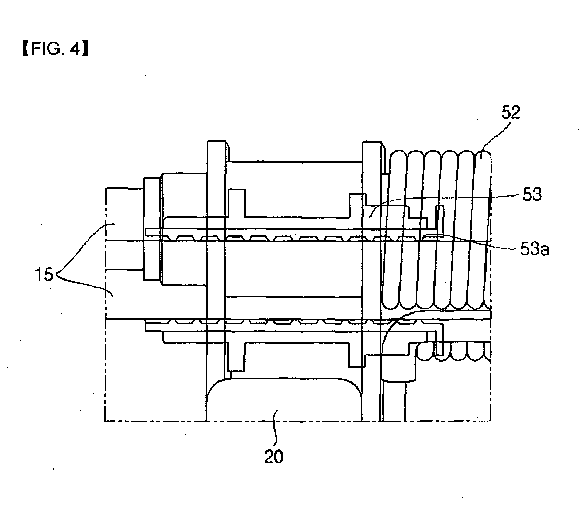

FIG. 1 and FIG. 2 are perspective views respectively showing states before and after an operation of a structure for movement of a rear catch of a double folding seat for a vehicle according to an exemplary embodiment of the present invention, FIG. 3 is a perspective view of a moving operation part of a structure for movement of a rear catch of a double folding seat for a vehicle according to an exemplary embodiment of the present invention, and FIG. 4 is a side view of a moving operation part of a structure for movement of a rear catch of a double folding seat for a vehicle according to an exemplary embodiment of the present invention.

As shown in FIG. 1, a seat frame 10 of a double folding seat 100 according to an exemplary embodiment of the present invention includes a front mounting structure a front part of which is fixed by a hinge coupling part including a front catch 30, and a rear mounting structure which uses a rear catch 20 and a striker 25 so as to be unlocked in response to a manipulation of a lever (not shown).

An exemplary embodiment of the present invention makes it easy to obtain a sufficient space for getting in or out of seats in a third array of a vehicle by moving the rear catch 20 in left and right directions using a cable 60 in a rotation structure of the front catch 30 and a leg frame 40 of the hinge coupling part in the double folding seat 100.

Accordingly, in an exemplary embodiment of the present invention, the rear catch 20 is configured to be movable in left and right directions. As shown in the drawings, a moving operation part 50 of the rear catch 20 connects the leg frames 40 with a pair of connecting pipes 15, and the rear catch 20 is mounted on the connecting pipe 15 to be movable in left and right directions.

At this time, the moving operation part 50 is provided to the rear catch 20 which is closer to a quarter trim 5, and the rear catch 20 is configured to be operated.

That is, the rear catch 20 is unlocked from the striker 25 in response to a manipulation of a lever during the double folding of a seat 100.

Here, a movement gap of the rear catch 20 is limited by connecting pipe 15 between the rear catch 20 and a movement limit bracket 51 having a horizontal surface 51 a and a vertical surface 51a which are connected to the leg frame 40, and at the same time, a return spring 52 is provided so that the rear catch 20 elastically returns to an original state by the return spring 52 when the seat 100 returns to its original state.

At this time, the return springs 52 are mounted to both two the connecting pipes 15 so as to equilibrate while the rear catch 20 moves in left and right directions.

Meanwhile, the rear catch 20 which moves while contacting the connecting pipe 15 can smoothly move in left and right direction by a bushing 53, and as shown in FIG. 4, projections 53a are arranged with a constant interval on an inner surface thereof so as to further reduce area contacting the connecting pipe 15 thereby minimizing friction force.

The cable 60 which is a medium for moving the rear catch 20 is connected to the moving operation part 50 including the rear catch 20 which is movable in left and right directions, and the cable 60 passes through the vertical surface 51b of the movement limit bracket 51 and is fixed to a side surface of the rear catch 20.

Accordingly, when the cable 60 is pulled, a moving direction of the cable 60 is equal to a moving direction of the rear catch 20, so that the rear catch 20 can easily move on the connecting pipe 15.

As such, the cable 60 connected to the rear catch 20 is elongated to be connected to the front mounting structure including the hinge coupling part, and is connected to a side surface of the front leg frame 40 via a direction change bracket 35 which is fixed to the front catch 30 of the hinge coupling part and is configured such that the cable 60 changes a direction while passing therethrough.

Accordingly, for the double folding of the seat 100, a seat back 110 is forwardly folded relative to a lower part of a seat cushion 1210, the rear catch 20 is unlocked from the striker 25, and the seat cushion 120 is erected forward. In this case, while the fixing point of the cable 60 to the leg frame 40 becomes farther from the moving operation part 50, i.e., while the leg frame 40 rotates, the cable 60 is pulled in a forward direction.

The cable 60 which is pulled in a forward direction through the direction change bracket 35 pulls the rear catch 20, and thereby the rear catch 20 is pulled toward an inside of a seat 100, i.e., toward an inside of a cabin, so as to move along the connecting pipe 15.

As such, the rear catch 20 which is pulled toward an inside of a cabin by the cable 60 during the double folding of the seat 100 increases a gap between the quarter trims 5 so as to maximize a space for getting in and getting out of the seat 100 of a third array.

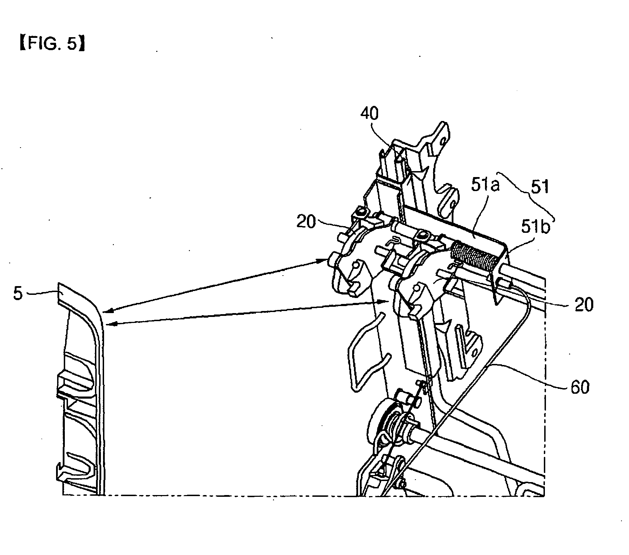

This is shown in FIG. 5, and the gap is increased by about 100mm from 280mm of a prior art to 380mm, and this may be a moving gap of the rear catch 20.

Accordingly, in a structure for movement of a rear catch of a double folding seat for a vehicle according to an exemplary embodiment of the present invention, a latch structure of the double folding seat 100 which may interfere with a passenger during getting in and getting out of the seat 100 of the third array is moved toward an inside of a cabin so as to enlarge a space for getting in and getting out.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

As described above, in a structure for movement of a rear catch of a double folding seat for a vehicle according to an exemplary embodiment of the present invention, a space between the quarter trim and the rear catch is enlarged so as to enlarge a space for getting in and getting out of the seat of the third array, thereby enhancing convenience of a passenger.

## Claims

1. A structure for movement of a rear catch of a double folding seat (100) for a vehicle having a seat frame (10) with a front mounting structure which is fixed by a hinge coupling part including a front catch (30) and a rear mounting structure using a rear catch (20) and a striker (25) so as to be unlocked in response to a manipulation of a lever, comprising:
a cable (60) one end of which is connected to the rear catch (20) and the other end of which is disposed in a front side and is fixed to a side surface of a leg frame (40) which rotates during folding,
**characterised in that**
a moving operation part (50) connecting leg frames (40) with a pair of connecting pipes (15), the rear catch (20) being movable in left and right directions on the connecting pipe (15), limiting a moving gap of the rear catch (20) and at the same time returning the rear catch (20) to an original state thereof; and

2. The structure of claim 1, wherein the moving operation part (50) comprises:
a movement limit bracket (51) which is mounted to the leg frame (40) so as to limit movement of the rear catch (20) and has a shape of an upside down L,
a return spring (52) which is mounted to the connecting pipe (15) between the rear catch (20) and the movement limit bracket (51) so as to return the rear catch (20) to an original state thereof when a seat (100) returns to an original state; and
a bushing (53) which is connected to the connecting pipe (15) so as to make the rear catch (20) smoothly move on the connecting pipe (15).

3. The structure of claim 1, whereon the cable (60) passes through a vertical surface (51b) of the movement limit bracket (51) and is fixed to a side surface of the rear catch (20) such that a moving direction of the cable (60) is equal to a moving direction of the rear catch (20) so that the rear catch (20) can easily move on the connecting pipe (15).

4. The structure of claim 1, wherein a direction change bracket (35) which is fixed to the front catch (30) of the hinge coupling part is interposed in the cable (60) such that the direction of the cable (60) can be changed on an extended line thereof.

5. The structure of claim 2, wherein the return springs (52) are provided both to the two connecting pipes (15) so as to make equilibrium in left and right direction while the rear catch (20) moves in left and right directions.

6. The structure of claim 2, wherein a projection is arranged on an inner surface of the bushing (53) so as to reduce contact surface with the connecting pipe (15) thereby minimizing friction force.

## Patentansprüche

1. Struktur zum Bewegen einer hinteren Verriegelung eines Zweifachklappsitzes (100) für ein Fahrzeug, der einen Sitzrahmen (10) aufweist mit einer vorderen Befestigungsstruktur, die von einem Gelenk-Verbindungsteil befestigt ist, das eine vordere Verriegelung (30) aufweist, und mit einer hinteren Befestigungsstruktur, die eine hintere Verriegelung (20) und einen Verriegelungsbolzen (25) verwendet, so dass sie als Reaktion auf eine Betätigung eines Hebels entriegelt wird, aufweisend ein Kabel (60), dessen eines Ende an der hinteren Verriegelung (20) angeschlossen ist und dessen anderes Ende an einer Vorderseite angeordnet ist und an einer Seitenfläche eines Rahmenschenkels (40) befestigt ist, der während des Klappens geschwenkt wird, **dadurch gekennzeichnet, dass** ein Bewegebetriebsteil (50) die Rahmenschenkel (40) mit einem Paar von Verbindungsrohren (15) verbindet, wobei die hintere Verriegelung (20) an dem Verbindungsrohr (15) in eine linke und in eine rechte Richtung bewegbar ist, einen Bewegungsspielraum der hinteren Verriegelung (20) begrenzend und zugleich die hintere Verriegelung (20) in ihre ursprüngliche Lage zurückführend.

2. Struktur gemäß Anspruch 1, wobei das Bewegebetriebsteil (50) aufweist:
einen Bewegungsbegrenzungsarm (51), der an dem Rahmenschenkel (40) zum Begrenzen der Bewegung der hinteren Verriegelung (20) befestigt ist und der die Form eines auf dem Kopf stehenden L hat,
eine Rückstellfeder (52), die an dem Verbindungsrohr (15) zwischen der hinteren Verriegelung (20) und dem Bewegungsbegrenzungsarm (51) montiert ist, um die hintere Verriegelung (20) in ihre ursprüngliche Lage zurückzuführen, wenn ein Sitz (100) in eine ursprüngliche Lage zurückgeführt wird, und
eine Buchse (53), die mit dem Verbindungsrohr (15) verbunden ist, um eine leichtgängige Bewegung der hinteren Verriegelung (20) an dem Verbindungsrohr (15) zu ermöglichen.

3. Struktur gemäß Anspruch 1, wobei das Kabel (60) durch eine vertikale Fläche (51b) des Bewegungsbegrenzungsarms (51) hindurch verläuft und an einer Seitenfläche der hinteren Verriegelung (20) derart befestigt ist, dass eine Bewegungsrichtung des Kabels (60) gleich einer Bewegungsrichtung der hinteren Verriegelung (20) ist, so dass die hintere Verriegelung (20) einfach an dem Verbindungsrohr (15) bewegt werden kann.

4. Struktur gemäß Anspruch 1, wobei ein Richtungsänderungshalter (35), der an der vorderen Verriegelung (30) des Gelenk-Verbindungsteils befestigt ist, an dem Kabel (60) derart zwischengeschaltet ist, dass die Richtung des Kabels (60) auf eine verlängerte Linie davon geändert werden kann.

5. Struktur gemäß Anspruch 2, wobei die Rückstellfedern (52) beide an den zwei Verbindungsrohren (15) bereitgestellt sind, damit ein Gleichgewicht in die linke und die rechte Richtung hergestellt ist, während die hintere Verriegelung (20) in die linke und die rechte Richtung bewegt wird.

6. Struktur gemäß Anspruch 2, wobei ein Vorsprung an der Innenfläche der Buchse (53) angeordnet ist, um die Kontaktfläche mit dem Verbindungsrohr (15) zu verringern und dadurch die Reibungskraft zu minimieren.

## Revendications

1. Structure pour le mouvement d'un loquet arrière d'un siège double repliable (100) pour un véhicule ayant une armature de siège (10) avec une structure de montage avant qui est fixée par une partie de couplage articulée comprenant un loquet avant (30) est une structure de montage arrière utilisant un loquet arrière (20) et un ergot (25) de manière à être déverrouillé en réponse à une manipulation d'un levier, comprenant :
un câble (60) dont une extrémité est reliée au loquet arrière (20) et dont l'autre extrémité est disposée dans un côté avant et est fixée à une surface latérale d'un socle (40) qui tourne durant le repliage,
**caractérisée en ce qu'**une partie d'actionnement mobile (50) reliant les socles (40) avec une paire de tubes de raccord (15) le loquet arrière (20) se déplaçant dans les directions gauche et droite sur le tube de raccord, limite un espace mobile du loquet arrière (20) et en même temps renvoi le loquet arrière (20) à son état original.

2. Structure selon la revendication 1, dans laquelle la partie d'actionnement mobile (50) comprend :
une patte de limitation de mouvement (51) qui est montée sur le socle (40) de manière à limiter le mouvement du loquet arrière (20) et présente une forme de L inversé,
un ressort de rappel (52) qui est monté sur le tube de raccord (15) entre le loquet arrière (20) et la patte de limitation de mouvement (51) de manière à renvoyer le loquet arrière (20) à son état original quand un siège (100) retourne à un état original ; et
une douille (53) qui est reliée au tube de raccord (15) de manière à faire se déplacer le loquet arrière (20) délicatement sur le tube de raccord (15).

3. Structure selon la revendication 1, dans laquelle le câble (60) passe à travers une surface verticale (51b) de la patte de limitation de mouvement (51) et est fixé à une surface latérale du loquet arrière (20) de sorte qu'une direction de déplacement du câble (60) est égale à une direction de déplacement du loquet arrière (20) de sorte que le loquet arrière (20) puisse facilement se déplacer sur le tube de raccord (15).

4. Structure selon la revendication 1, dans laquelle une patte de changement de direction (35) qui est fixée sur le loquet avant (30) de la partie de couplage articulée est intercalée dans le câble (60) de sorte que la direction du câble (60) peut être changée sur une ligne étendue de celui-ci.

5. Structure selon la revendication 2, dans laquelle les ressorts de rappel (52) sont prévus à la fois sur les deux tubes de raccord (15) de manière à réaliser un équilibre dans la direction droite et gauche alors que le loquet arrière (20) se déplace dans les directions gauche et droite.

6. Structure selon la revendication 2, dans laquelle une saillie est agencée sur une surface intérieure de la douille (53) de manière à réduire la surface de contact avec le tube de raccord (15) en minimisant ainsi une force de frottement.
